# FASCICULE DE BREVET EUROPEEN

(11) **EP 1 725 814 B1**
(45) Date de publication et mention de la délivrance du brevet: **14.05.2008**
(21) Numéro de dépôt: 05737042.1
(22) Date de dépôt: 01.03.2005
(51) Int. Cl.: F24F 11/00, G05B 13/04

(54) **SYSTEME ET PROCEDE DE COMMANDE D’EQUIPEMENTS DE CONDITIONNEMENT D’AMBIANCE DANS UNE ENCEINTE**
SYSTEM UND VORRICHTUNG ZUR STEUERUNG EINER KLIMAANLAGE IN EINER KAMMER
SYSTEM AND DEVICE FOR CONTROLLING AIR-CONDITIONING EQUIPMENT IN A CHAMBER

(30) Priorité: 01.03.2004 FR 0402072; 05.11.2004 FR 0411805
(43) Date de publication de la demande: 29.11.2006
(73) Titulaire: Ergelis, 91140 Villebon-sur-Yvette (FR)
(72) Inventeur: Tantot, Florence, 91140 Villebon-sur-Yvette (FR)
(74) Mandataire: Bredema
(86) Numéro de dépôt international: PCT/FR2005/000484
(87) Numéro de publication internationale: WO 2005/085719

(56) Documents cités:
- EP-A- 0 915 301
- EP-A- 0 999 418
- US-B1- 6 219 590
- PATENT ABSTRACTS OF JAPAN vol. 1995, no. 01, 28 février 1995 (1995-02-28) & JP 06 288595 A (MATSUSHITA ELECTRIC IND CO LTD; others: 01), 11 octobre 1994 (1994-10-11)

## Description

La présente invention concerne un système et un procédé de commande des équipements de conditionnement d'ambiance.

Les équipements de conditionnement d'ambiance ont pour fonction de conditionner la température et la composition chimique d'une substance, appelée substance ambiante, contenue dans une enceinte ou un ensemble d'enceintes, afin que cette température et cette composition chimique respectent certaines contraintes prédéfinies.

Les équipements de conditionnement d'ambiance consistent en les équipements suivants :
- des équipements ayant pour fonction de réchauffer ou de refroidir la substance ambiante,
- des équipements ayant pour fonction de réchauffer ou de refroidir une substance intermédiaire autre que la substance ambiante, de la faire circuler, de la stocker, de la déstocker, ou de transférer de la chaleur ou du froid depuis cette substance intermédiaire vers la substance ambiante ou vers une autre substance intermédiaire,
- des équipements ayant pour fonction de changer la composition chimique de la substance ambiante à travers, à titre d'exemple non limitatif, l'adjonction ou la suppression d'éléments chimiques donnés, ou le remplacement d'une partie de la substance ambiante par une substance ayant une composition chimique différente,
- des équipements ayant pour fonction d'homogénéiser la température ou la composition chimique de la substance ambiante,
- des équipements combinant plusieurs des fonctions définies ci-dessus.

À titre d'exemple non limitatif, l'enceinte peut être un local dans un bâtiment, la substance ambiante peut être l'air ambiant contenu dans le local, et la contrainte peut être les températures minimales et maximales tolérables à chaque heure de la journée, ainsi que le pourcentage maximum de gaz carbonique contenu dans l'air ambiant. Les équipements de conditionnement d'ambiance peuvent consister alors :
- en une chaudière ayant pour fonction de réchauffer une substance intermédiaire (de l'eau),
- en un ensemble de pompes et de tuyaux ayant pour fonction de transporter l'eau chaude vers des radiateurs, et de la ramener vers la chaudière,
- en un ensemble de radiateurs ayant pour fonction de transférer la chaleur depuis l'eau vers l'air ambiant,
- en une bouche d'aération avec volet réglable permettant d'assurer le renouvellement de l'air.

Les équipements de conditionnement d'ambiance utilisent, pour fonctionner, de l'énergie. Le coût de revient de l'énergie dépend de la source d'énergie utilisée, de la quantité d'énergie consommée, du moment où elle est consommée, et d'autres facteurs.

Les équipements de conditionnement d'ambiance doivent être commandés afin d'ajuster leur fonctionnement de telle sorte que la température et la composition chimique de la substance ambiante soient conformes aux contraintes prédéfinis.

Les systèmes de commande sont traditionnellement de l'un des types suivants :
- systèmes de commande manuels, requérant une intervention humaine pour tout ajustement du fonctionnement des équipements de conditionnement d'ambiance. Ces dispositifs ont l'inconvénient d'imposer de nombreuses interventions humaines,
- systèmes de commande à base d'automatismes, capables d'ajuster le fonctionnement des équipements de conditionnement d'ambiance sans requérir d'intervention humaine systématique. Avec de tels systèmes, les commandes envoyées aux équipements de conditionnement d'ambiance sont le résultat d'une formule de calcul explicite et prédéfinie appliquée aux valeurs mesurées d'un certain nombre de variables d'environnement.

L'art antérieur connaît déjà le brevet US 6,185,483 dans lequel est décrit un système pour contrôler un moyen de stockage d'énergie relié à un système de contrôle environnemental de type air conditionné. Le contrôleur comprend une structure de données en temps réel correspondant au profil des prix d'une unité d'énergie en fonction du temps (par exemple au cours de la journée). Des heuristiques de calcul sont alors appliquées sur ces données en temps réel. Ces heuristiques sont des modèles prédéfinis calculés une fois pour toute au moment du développement du produit permettant de programmer une réponse de l'automate en fonction d'un profil des prix.

Le principal inconvénient d'une telle méthode est l'aspect statique de l'algorithme d'optimisation, puisque les modèles de prix sont prédéfinis. L'optimisation n'est donc pas réalisée en temps réel. Ceci a pour conséquence que l'optimum choisi n'est pas un optimum absolu, mais bien un optimum relatif, par rapport aux modèles prédéfinis. Ceci limite également la prise en compte d'un plus grand nombre de variables et d'éventuelles corrélations entre ces variables.

Il faut noter que le brevet japonais JP 62116844A2 décrit une méthode de calcul d'un pseudo-optimum en utilisant de la même façon des profils de référence et en calculant l'optimum des prix selon cette référence.

Par ailleurs, certains documents de l'art antérieur du domaine du contrôle des équipements d'ambiance utilisent un algorithme génétique pour le calcul des commandes. C'est le cas par exemple des brevets japonais JP 11108415A2 et JP 08005126. Encore une fois, l'utilisation d'algorithmes génétiques impose de fixer des seuils prédéfinis dans les décisions ce qui provoque imprécisions dans les optima choisis pour des variations fines des paramètres.

De plus, l'art antérieur connaît des méthodes d'automatismes pour les équipements d'ambiance. C'est par exemple le cas du brevet japonais JP 03170735A2 qui utilise les données en température des jours précédents pour minimiser une quantité de glace de refroidissement. Dans telles méthodes ne sont pas des méthodes d'optimisation en temps réel des paramètres de commande d'une enceinte.

Enfin, le brevet japonais JP 2002206785A2 divulgue une méthode d'optimisation de la production d'un équipement selon sa consommation et les paramètres associés à une enceinte. Les contraintes portent alors sur les données de production de l'équipement. Le problème technique résolu par ce brevet est donc celui de la production d'un équipement source de chaleur. Il convient de bien comprendre que ce brevet ne solutionne donc pas le problème technique résolu par la présente invention, qui est la gestion optimale de différents équipements d'ambiance pour le respect de contraintes portant sur une enceinte dans laquelle ils sont insérés.

Ainsi, le principe de la présente invention est d'agir sur les paramètres d'ambiance de l'enceinte et non seulement sur les paramètres de production d'énergie comme dans les documents de l'art antérieur. Ceci est alors réalisé en exploitant la tolérance sur les contraintes d'ambiance de l'enceinte elle-même.

La présente invention entend donc remédier aux inconvénients de l'art antérieur en proposant une méthode d'optimisation en temps réel afin de déterminer les commandes envoyées aux équipements de conditionnement d'ambiance d'une enceinte, pour un contrôle des paramètres d'une enceinte.

Pour ce faire, l'invention concerne, dans son acception la plus large, un procédé de commande d'équipements de conditionnement d'ambiance pour une enceinte ou un ensemble d'enceintes, caractérisé en ce qu'il comporte au moins les étapes consistant à :
- calculer de manière anticipée, par simulation, au moins un paramètre choisi parmi la température et la composition chimique de l'enceinte ou de l'ensemble d'enceintes, la consommation énergétique des équipements de conditionnement d'ambiance, et le coût de revient de l'énergie consommée, prévus sur une plage de temps donnée, en fonction de formules de calcul explicites pendant cette plage de temps, ledit calcul étant effectué par simulation pour un nombre arbitrairement grand de formules de calcul explicites sur une plage de temps donnée, et
- sélectionner parmi lesdites les formules de calcul explicites, les formules de calcul explicites, appelées formules de calcul explicites optimales, respectant les contraintes prédéfinies de température et de composition chimique, et correspondant à la minimisation d'une fonction de coût liée audit coût de revient de l'énergie.

De préférence, il comprend en outre une étape d'appel de données correspondant à au moins un paramètre choisi parmi la température et la composition chimique de l'enceinte ou de l'ensemble d'enceintes, la consommation énergétique des équipements de conditionnement d'ambiance, et le coût de revient de l'énergie consommée, prévus sur une plage de temps donnée.

Par ailleurs, il comprend une étape d'acquisition de données associées à ladite enceinte ou audit ensemble d'enceinte.

De préférence, il comprend en outre une étape de calcul par anticipation de la quantité d'énergie produite par des équipements de production d'énergie et du coût de revient de production de cette énergie, en fonction des commandes envoyées à ces équipements, et de données externes.

Avantageusement, ladite étape de simulation est réalisée en outre par rapport à la production énergétique des équipements de production d'énergie et le coût de revient de l'énergie produite.

De plus, ladite formule de calcul explicite correspond à un ensemble d'opérations arithmétiques et logiques appliquées aux variables d'environnement pour l'obtention d'une séquence de commande.

De préférence, ladite minimisation de ladite fonction de coût correspond à une minimisation du prix de revient de l'énergie.

L'invention concerne également un programme d'ordinateur, éventuellement stocké sur un support d'enregistrement caractérisé en ce qu'il comprend un ensemble d'instructions pour la réalisation du procédé selon l'invention.

Elle concerne également un le système de commande d'équipements de conditionnement d'ambiance pour une enceinte ou un ensemble d'enceintes, caractérisé en ce qu'il comporte des moyens lui permettant
- de calculer de manière anticipée, par simulation, au moins un paramètre choisi parmi la température et la composition chimique de l'enceinte ou de l'ensemble d'enceintes, la consommation énergétique des équipements de conditionnement d'ambiance, et le coût de revient de l'énergie consommée, prévus sur une plage de temps donnée, en fonction d'une formule de calcul explicite associée à au moins une séquence de commandes envoyées aux équipements de conditionnement d'ambiance pendant cette plage de temps,
- d'effectuer ce calcul par simulation pour un nombre arbitrairement grand de formules de calcul explicite sur une plage de temps donnée, et
- de sélectionner parmi lesdites formules de calcul simulée la formule de calcul, appelée formule de calcul optimale, respectant les contraintes prédéfinies de température et de composition chimique, et correspondant à la minimisation d'une fonction de coût liée audit coût de revient de l'énergie.

Il comprend de préférence un sous-système de calcul, et :
- le sous-système de calcul peut disposer de fonctions de télécommunication lui permettant d'acquérir de manière automatique des données relatives aux prévisions météorologiques, des données relatives aux coûts des énergies, ou d'autres données d'origine externe,
- le sous-système de calcul peut mettre en oeuvre des algorithmes d'optimisation tels que l'algorithme du simplexe ou d'autres algorithmes similaires, permettant de rendre plus rapide le processus de simulation et de sélection de la séquence de commandes optimale,
- le sous-système de calcul peut disposer de fonctions lui assurant des caractéristiques de tolérance aux pannes et de continuité de service spécifiques,
- le système de commande peut disposer de fonctions lui permettant de commander des équipements de production d'énergie tels que, à titre d'exemples non limitatifs, des groupes électrogènes ou des centrales de cogénération,
- le sous-système de calcul peut disposer de fonctions lui permettant de calculer par anticipation la quantité d'énergie produite par des équipements de production d'énergie et le coût de revient de production de cette énergie, en fonction des commandes envoyées à ces équipements, et de données externes telles que, à titre d'exemple non limitatif, des prévisions météorologiques ou des données relatives aux coûts d'autres énergies. À titre d'exemples non limitatifs, ces équipements de production d'énergie peuvent être des groupes électrogènes, des centrales de cogénération, des centrales éoliennes, des centrales solaires, ou des centrales de géothermie,
- le sous-système de calcul peut disposer de fonctions lui permettant (i) de calculer de manière anticipée, par simulation, au moins un paramètre choisi parmi la température et la composition chimique de l'enceinte ou de l'ensemble d'enceintes, la consommation énergétique des équipements de conditionnement d'ambiance, la production énergétique des équipements de production d'énergie, le coût de revient de l'énergie consommée et de l'énergie produite, prévus sur une plage de temps donnée, en fonction d'une formule de calcul explicite associée à au moins une séquence de commandes envoyées aux équipements de conditionnement d'ambiance et aux équipements de production d'énergie, pendant cette plage de temps (ii) d'effectuer ce calcul par simulation pour un nombre arbitrairement grand de formules de calcul explicite sur une plage de temps donnée, et (iii) de sélectionner la formule de calcul, dite formule de calcul optimale, respectant les contraintes prédéfinies de température et de composition chimique, et correspondant la minimisation d'une fonction de coût liée audit coût de revient de l'énergie,
- le sous-système de calcul peut disposer de fonctions de calcul et de télécommunication lui permettant d'engager des transactions automatiques avec des systèmes externes pour l'achat et la revente d'énergie,
- le système de commande peut comprendre, outre le sous-système de calcul, des sous-systèmes de relais permettant de relayer les commandes depuis le sous-système de calcul vers les équipements commandés. ; le sous-système de calcul et les sous-systèmes de relais disposent alors de fonctions de communication leur permettant d'échanger des données, à travers, à titre d'exemple non limitatif, des réseaux de communication tels que les réseaux téléphoniques, le réseau Internet, des réseaux radio, des réseaux locaux, ou des réseaux par courant porteur,
- les sous-systèmes de relais peuvent disposer de capacités de calcul permettant de calculer les commandes à envoyer aux équipements de conditionnement d'ambiance ou aux équipements de production d'énergie comme le résultat de formules de calcul explicites appliquées aux valeurs mesurées d'un certain nombre de variables d'environnement,
- le sous-système de calcul et les sous-systèmes de relais peuvent disposer de fonctions permettant, de manière automatique, au sous-système de calcul de charger et de modifier dans les sous-systèmes de relais les formules de calcul explicites utilisées par ces sous-systèmes de relais pour le calcul des commandes à envoyer aux équipements commandés,
- le sous-système de calcul peut disposer de fonctions permettant (i) de calculer de manière anticipée, par simulation, au moins un paramètre choisi parmi la température et la composition chimique de l'enceinte ou de l'ensemble d'enceintes, la consommation énergétique des équipements de conditionnement d'ambiance, la production énergétique des équipements de production d'énergie, le coût de revient de l'énergie consommée et de l'énergie produite, prévus sur une plage de temps donnée, en fonction de formules de calcul explicites envoyées aux sous-systèmes de relais au début de cette plage de temps, (ii) d'effectuer ce calcul par simulation pour un nombre arbitrairement grand de formules de calcul explicites, et (iii) de sélectionner les formules de calcul explicites, appelées formules de calcul explicites optimales, respectant les contraintes prédéfinies de température et de composition chimique, et correspondant la minimisation d'une fonction de coût liée audit coût de revient de l'énergie,
- le sous-système de calcul peut être localisé à distance des équipements commandés. Dans ce cas, le système de commande comprend, outre le sous-système de calcul, des sous-systèmes de relais permettant de relayer les commandes depuis le sous-système de calcul vers les équipements commandés,
- le sous-système de calcul peut disposer de fonctions de calcul lui permettant de calculer les séquences de commandes ou les formules de calcul explicites optimales pour des équipements localisés sur des sites géographiques distincts, pour, à titre d'exemple non limitatif, permettre d'optimiser la consommation énergétique dans le cas où le coût de l'énergie dépend de la consommation cumulée de plusieurs sites géographiques distincts,
- le sous-système de calcul ou les sous-systèmes de relais peuvent comporter des interfaces homme-machine permettant de décrire les caractéristiques des équipements de conditionnement d'ambiance, les caractéristiques de l'enceinte ou de l'ensemble d'enceintes, et les caractéristiques des équipements de production d'énergie, et d'autres données. À titre d'exemple non limitatif, l'interface homme-machine permet de décrire les caractéristiques thermiques et énergétiques des équipements de conditionnement d'ambiance et de l'enceinte ou de l'ensemble d'enceintes, et les caractéristiques énergétiques et de coût de revient des équipements de production d'énergie,
- le sous-système de calcul peut disposer de fonctions de calcul lui permettant d'effectuer la sélection de la séquence de commandes ou des formules de calcul explicites sur d'autres critères que la minimisation du coût de revient de l'énergie, et avec d'autres contraintes que les contraintes prédéfinies de température et de composition chimique,
- à titre d'application non limitative, l'enceinte ou l'ensemble d'enceintes peut être un bâtiment ou un ensemble de bâtiments, les équipements de conditionnement d'ambiance peuvent être les équipements de conditionnement d'ambiance de ces bâtiments, les équipements de production peuvent être des groupes électrogènes, des centrales de cogénération, des centrales éoliennes, des centrales solaires ou des centrales de géothermie, le sous-système de calcul peut être un ordinateur ou un ensemble d'ordinateurs, les sous-systèmes de relais peuvent être des cartes électroniques ou des ensembles de cartes électroniques interconnectées, et les sources d'énergie peuvent être l'électricité, le gaz, le fioul, ou la biomasse,
- au titre d'une autre application non limitative, l'enceinte ou l'ensemble d'enceintes peut être un entrepôt ou une chambre froide, ou un ensemble d'entrepôts et de chambres froides, et les équipements de conditionnement d'ambiance peuvent être les équipements de production et de distribution du froid.

On comprendra mieux l'invention à l'aide des figures données à titre indicatif où :
- la figure 1 représente la mise en oeuvre du système pour le contrôle des commandes des équipements d'ambiance et,
- la figure 2 représente les étapes du procédé d'optimisation d'une séquence de contrôle en fonction des paramètres techniques d'une enceinte, et des paramètres dynamiques d'ambiance et de prix.

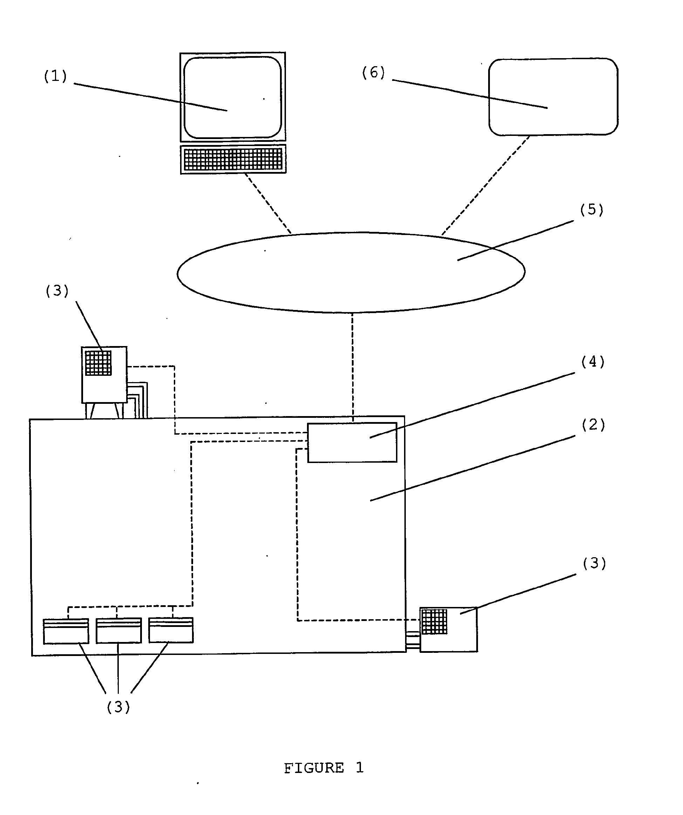

Nous décrivons maintenant un mode de réalisation particulier de l'invention illustré figure 1. Ce mode de mise en oeuvre est particulièrement adapté pour le traitement de variables externes comme la température ou la composition chimiques. L'utilisateur peut alors choisir quel type de variable il souhaite considérer dans les calculs d'optimisation. Ce type de variables dites inertielles possède en effet des propriétés de diffusion dans l'enceinte à contrôler. Il est entendu que le système décrit reste valable pour tout type de variable que l'homme du métier trouvera pertinente dans le but de contrôler les équipements d'ambiance.

La figure 1 illustre un mode de réalisation du système selon l'invention. Ce mode de réalisation met en oeuvre un ordinateur (1) localisé à distance d'un bâtiment (2) contenant des équipements de conditionnement d'ambiance (3), et une carte électronique d'interface (4) avec les équipements de conditionnement d'ambiance (3). L'ordinateur (1) et la carte électronique d'interface (4) disposent chacun de fonctions leur permettant de communiquer à travers un réseau de communication distant (5). Dans cette réalisation, le sous-système de calcul est l'ordinateur (1), et le sous-système de relais est la carte électronique d'interface (4).

L'ordinateur (1) héberge un programme informatique qui dispose des fonctions suivantes :
- interface graphique permettant à un opérateur humain de décrire les caractéristiques des équipements de conditionnement d'ambiance (3) et du bâtiment (2),
- accès automatique par le réseau de communication distant (5) avec un serveur de données externe (6) pour le téléchargement de prix horaires de l'électricité pour les 24 heures à venir, et de prévisions météorologiques pour les 24 heures à venir,
- calcul automatique de la température du bâtiment (2) sur une plage de temps donnée, en fonction de la séquence de commandes des équipements de conditionnement d'ambiance (3) sur cette plage de temps,
- sélection automatique, par itération et simulation sur un grand nombre de séquences de commandes, de la séquence de commandes respectant les températures de consignes minimales et maximales, et correspondant au coût énergétique minimal,
- transmission automatique vers les équipements de conditionnement d'ambiance (3), à tout moment de la plage de temps, des commandes correspondant à la séquence sélectionnée, à travers le réseau de communication distant (5) et la carte électronique d'interface (4).

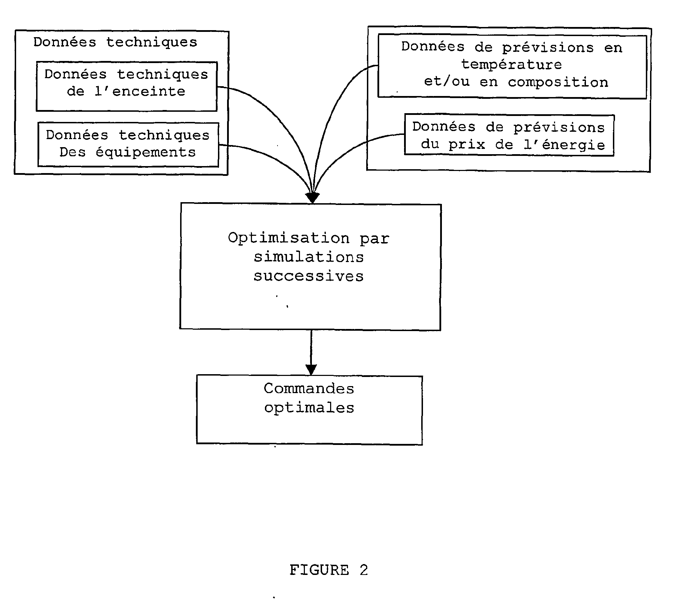

Illustré figure 2, le procédé selon l'invention peut être réalisé par un programme d'ordinateur éventuellement installé sur un poste de contrôle des équipements, ou sur un serveur distant.

Ce procédé contient une première étape d'acquisition ou d'appel des données pertinentes pour l'optimisation. Ces données sont d'une part des données techniques sur l'enceinte elle-même, comme par exemple des coefficients d'isolation, et des données techniques sur les équipements d'ambiance, comme la puissance nécessaire à leur fonctionnement. Ces données peuvent varier de façon dynamique ou être fixées en paramètre statique pour une période plus ou moins longue, si les caractéristiques des équipements et de l'enceinte ne varient pas.

Les contraintes en température et/ou en composition chimique sont également entrées afin de réaliser l'optimisation.

La seconde étape est l'acquisition de données dynamiques de température et/ou de composition chimique dans l'environnement de l'enceinte sur une période déterminée. Ces données peuvent être obtenues par prévisions au jour le jour via un serveur distant, téléchargées automatiquement, ou entrées en paramètre de façon dynamique. Les données dynamiques de prix de l'énergie sur une période prédéterminée sont également entrées en paramètre. De la même façon, ces données sont acquises automatiquement via un serveur spécialisé sur un réseau, ou selon tout autre mode d'acquisition.

De façon générale et pour une meilleure compréhension, on appellera les données techniques données pseudo-statiques, puisque les temps caractéristiques de variation sont plus faibles que ceux des variables dynamiques de température, de composition, et de prix.

L'ensemble de ces données associées à l'enceinte, pseudo-statiques et dynamiques qui sont acquises de façon pseudo-statique ou de façon dynamique sont entrées dans l'optimiseur qui simule l'ensemble des combinaisons de séquences de commande sur une période afin d'optimiser une fonction de coût liée au prix de revient de l'énergie et éventuellement à d'autres paramètres de coût. La séquence optimale étant alors déterminée, celle-ci est appliquée aux différents équipements d'ambiance de l'enceinte.

Par ailleurs, le procédé selon l'invention tient compte de variables externes (ou variables d'environnement) correspondant par exemple aux incertitudes sur les prévisions météorologiques, ou à des paramètres obtenus par des capteurs.

Les séquences de commandes sont donc généralisées sous forme de formules de calcul explicite correspondant au choix d'une séquence de commande particulière en fonction de ces variables externes (ou variables d'environnement). Pour une variable externe x donnée, la formule de calcul explicite se présente donc sous la forme simplifiée suivante :
F : Si {x=a} alors appliquer la séquence de commande s(a)
Si {x=b} alors appliquer la séquence de commande s(b)

Les valeurs a et b correspondent par exemple aux bornes inférieures et supérieures de l'incertitude sur la température extérieure et/ou la composition chimique extérieure, ou à une valeur seuil de la puissance consommée pour l'arrêt des commandes.

Selon ce formalisme, une séquence de commande correspond alors à une formule de calcul explicite lorsque les paramètres externes sont fixés. Elle est du type {appliquer une température de 10° à tel équipement pendant une heure, puis appliquer 12° pendant 30 minutes}. La formule de calcul explicite correspond donc à un ensemble d'opérations arithmétiques et logiques appliquées aux variables d'environnement pour l'obtention d'une séquence de commande.

Selon l'invention, l'optimisation est réalisée sur les formules de calcul explicites F, en simulant sur un nombre d'itération arbitrairement grand et sur une plage de temps donnée, la variation des variables externes et les séquences de commandes optimales associées.

La formule de calcul permettant la minimisation d'une fonction de coût est appelée formule de calcul optimale.

Selon un premier mode de réalisation, la fonction de coût est simplement égale au prix de l'énergie à payer sur la période. La séquence optimale est alors celle qui minimise le prix à payer tout en respectant les contraintes d'exploitation.

Selon un second mode de réalisation, il est possible de sortir des contraintes initiales en cas de compensation financière. Ce type de compensation définit une nouvelle fonction de coût qui est celle sur laquelle l'optimisation est réalisée. Selon ce mode de réalisation, une compensation financière est alors obtenue si une des contraintes de température ou de composition n'est pas respectée.

Le choix de l'un ou l'autre de ces modes de réalisation (minimisation du coût, ou bien d'une fonction de coût plus complexe) peut éventuellement être entré en paramètre de l'optimiseur suite à des contrats d'exploitation ou de régulation issus de l'utilisateur.

Le système précédemment décrit est alors apte à mettre en oeuvre le procédé illustré figure 2.

À titre d'exemple non limitatif, l'invention peut être utilisée pour la gestion énergétique des bâtiments tertiaires, en particulier centres commerciaux et bureaux.

## Revendications

1. Système de commande d'équipements de conditionnement d'ambiance pour une enceinte ou un ensemble d'enceintes, **caractérisé en ce qu'**il comporte des moyens lui permettant
- de calculer dé manière anticipée, par simulation, au moins un paramètre choisi parmi la température et la composition chimique de l'enceinte ou de l'ensemble d'enceintes, la consommation énergétique des équipements de conditionnement d'ambiance, et le coût de revient de l'énergie consommée, prévus sur une plage de temps donnée, en fonction d'une formule de calcul explicite associée à au moins une séquence de commandes envoyées aux équipements de conditionnement d'ambiance pendant cette plage de temps,
- d'effectuer ce calcul par simulation pour un nombre arbitrairement grand de formules de calcul explicite sur une plage de temps donnée, et
- de sélectionner parmi lesdites formules de calcul simulée la formule de calcul, appelée formule de calcul optimale, respectant les contraintes prédéfinies de température et de composition chimique, et correspondant à la minimisation d'une fonction de coût liée audit coût de revient de l'énergie.

2. Système selon la revendication 1, **caractérisé en ce qu'**il comporte des moyens de communication pour l'acquisition de données externes, par exemple mais non nécessairement des données de prévisions météorologiques ou des données relatives aux conditions de disponibilité des énergies.

3. Système selon la revendication 1 ou 2, **caractérisé en ce qu'**il comporte un sous-système de calcul mettant en oeuvre des algorithmes d'optimisation tel que l'algorithme du simplexe ou d'autres algorithmes similaires, permettant de rendre plus rapide le processus de simulation et de sélection de la séquence de commandes optimale.

4. Système selon l'une quelconque des revendications précédentes, **caractérisé en ce qu'**il dispose de fonctions lui assurant des caractéristiques de tolérance aux pannes et de continuité de service spécifiques.

5. Système selon l'une quelconque des revendications précédentes, **caractérisé en ce qu'**il dispose de fonctions lui permettant de commander des équipements de production d'énergie.

6. Système selon l'une quelconque des revendications précédentes, **caractérisé en ce qu'**il dispose de fonctions lui permettant de calculer par anticipation la quantité d'énergie produite par des équipements de production d'énergie et le coût de revient de production de cette énergie, en fonction en fonction d'une formule de calcul explicite associée à au moins une séquence de commande envoyée à ces équipements, et de données externes.

7. Système selon la revendication 5 et la revendication 6, **caractérisé en ce qu'**il dispose de fonctions lui permettant
(i) de calculer de manière anticipée, par simulation, au moins un paramètre choisi parmi la température et la composition chimique de l'enceinte ou de l'ensemble d'enceintes, la consommation énergétique des équipements de conditionnement d'ambiance, la production énergétique des équipements de production d'énergie, le coût de revient de l'énergie consommée et de l'énergie produite, prévus sur une plage de temps donnée, en fonction d'une formule de calcul explicite associée à au moins une séquence de commandes envoyées aux équipements de conditionnement d'ambiance et aux équipements de production d'énergie, pendant cette plage de temps, (ii) d'effectuer ce calcul par simulation pour un nombre arbitrairement grand de formules de calcul explicites sur une plage de temps donnée, et (iii) de sélectionner parmi lesdites formules de calcul simulée, la formule de calcul, appelée formule de calcul optimale, respectant les contraintes prédéfinies de température et de composition chimique, et correspondant à la minimisation d'une fonction de coût liée audit coût de revient de l'énergie.

8. Système selon l'une quelconque des revendications précédentes ; **caractérisé en ce qu'**il comporte des moyens de calcul et de communication pour la mise en oeuvre de sous-procédés automatiques transactionnels vers et/ou depuis des systèmes externes.

9. Système selon l'une quelconque des revendications précédentes, **caractérisé en ce qu'**il comprend un sous-système de calcul et des sous-systèmes de relais permettant de relayer les commandes depuis le sous-système de calcul vers les équipements commandés ; le sous-système de calcul et les sous-systèmes de relais disposent alors de fonctions de communication leur permettant d'échanger des données.

10. Système selon la revendication 9, **caractérisé en ce que** les sous-systèmes de relais disposent de capacités de calcul permettant de calculer les commandes à envoyer aux équipements de conditionnement d'ambiance ou aux équipements de production d'énergie comme le résultat de formules de calcul explicites appliquées aux valeurs mesurées d'un certain nombre de variables d'environnement.

11. Système selon la revendication 10, **caractérisé en ce que** le sous-système de calcul et les sous-systèmes de relais disposent de fonctions permettant, de manière automatique, au sous-système de calcul de charger et de modifier dans les sous-systèmes de relais les formules de calcul explicites utilisées par ces sous-systèmes de relais pour le calcul des commandes à envoyer aux équipements commandés.

12. Système selon la revendication 10 ou la revendication 11, **caractérisé en ce que** le sous-système de calcul dispose de fonctions permettant (i) de calculer de manière anticipée, par simulation, au moins un paramètre choisi parmi la température et la composition chimique de l'enceinte ou de l'ensemble d'enceintes, la consommation énergétique des équipements de conditionnement d'ambiance, la production énergétique des équipements de production d'énergie, le coût de revient de l'énergie consommée et de l'énergie produite, prévus sur une plage de temps donnée, en fonction de formules de calcul explicites envoyées aux sous-systèmes de relais au début de cette plage de temps, (ii) d'effectuer ce calcul par simulation pour un nombre arbitrairement grand de formules de calcul explicites, et (iii) de sélectionner les formules de calcul explicites, appelées formules de calcul explicites optimales, respectant les contraintes prédéfinies de température et de composition chimique, et correspondant à la minimisation d'une fonction de coût liée audit coût de revient de l'énergie.

13. Système selon les revendications 9, 10, 11 ou 12, **caractérisé en ce que** le sous-système de calcul est localisé à distance des équipements commandés.

14. Système selon la revendication 13, **caractérisé en ce que** le sous-système de calcul dispose de fonctions de calcul lui permettant de calculer les séquences de commandes ou les formules de calcul explicites optimales pour des équipements localisés sur des sites géographiques distincts.

15. Système selon l'une quelconque des revendications précédentes, **caractérisé en ce que** le sous-système de calcul ou les sous-systèmes de relais comportent des interfaces homme-machine permettant de décrire les caractéristiques des équipements de conditionnement d'ambiance, les caractéristiques de l'enceinte ou de l'ensemble d'enceintes, et les caractéristiques des équipements de production d'énergie, et d'autres données.

16. Système selon l'une quelconque des revendications précédentes, **caractérisé en ce que** l'enceinte ou l'ensemble d'enceintes est un bâtiment ou un ensemble de bâtiments, les équipements de conditionnement d'ambiance sont les équipements de conditionnement d'ambiance de ces bâtiments, les équipements de production sont des groupes électrogènes, des centrales de cogénération, des centrales éoliennes, des centrales solaires ou des centrales de géothermie, le sous-système de calcul est un ordinateur ou un ensemble d'ordinateurs, les sous-systèmes de relais sont des cartes électroniques ou des ensembles de cartes électroniques interconnectées, et les sources d'énergie sont l'électricité, le gaz, le fioul, ou la biomasse.

17. Système selon l'une quelconque des revendications 1 à 15, **caractérisé en ce que** l'enceinte ou l'ensemble d'enceintes est un entrepôt ou une chambre froide, ou un ensemble d'entrepôts et de chambres froides, et les équipements de conditionnement d'ambiance sont les équipements de production et de distribution du froid.

18. Procédé de commande d'équipements de conditionnement d'ambiance pour une enceinte ou un ensemble d'enceintes, **caractérisé en ce qu'**il comporte au moins les étapes consistant à :
- calculer de manière anticipée, par simulation, au moins un paramètre choisi parmi la température et la composition chimique de l'enceinte ou de l'ensemble d'enceintes, la consommation énergétique des équipements de conditionnement d'ambiance, et le coût de revient de l'énergie consommée, prévus sur une plage de temps donnée, en fonction de formules de calcul explicites pendant cette plage de temps, ledit calcul étant effectué par simulation pour un nombre arbitrairement grand de formules de calcul explicites sur une plage de temps donnée, et
- sélectionner parmi lesdites les formules de calcul explicites, les formules de calcul explicites, appelées formules de calcul explicites optimales, respectant les contraintes prédéfinies de température et de composition chimique, et correspondant à la minimisation d'une fonction de coût liée audit coût de revient de l'énergie.

19. Procédé de commande d'équipements de conditionnement d'ambiance pour une enceinte ou un ensemble d'enceintes selon la revendication 18, **caractérisé en ce qu'**il comprend en outre un étape d'appel de données correspondant à au moins un paramètre choisi parmi la température et la composition chimique de l'enceinte ou de l'ensemble d'enceintes, la consommation énergétique des équipements de conditionnement d'ambiance, et le coût de revient de l'énergie consommée, prévus sur une plage de temps donnée.

20. Procédé de commande d'équipements de conditionnement d'ambiance pour une enceinte ou un ensemble d'enceintes selon la revendication 18, **caractérisé en ce qu'**il comprend en outre une étape d'acquisition de données associées à ladite enceinte ou audit ensemble d'enceinte.

21. Procédé de commande d'équipements de conditionnement d'ambiance pour une enceinte ou un ensemble d'enceintes selon la revendication 18, **caractérisé en ce qu'**il comprend en outre une étape de calcul par anticipation de la quantité d'énergie produite par des équipements de production d'énergie et du coût de revient de production de cette énergie, en fonction des commandes envoyées à ces équipements, et de données externes.

22. Procédé de commande d'équipements de conditionnement d'ambiance pour une enceinte ou un ensemble d'enceintes selon la revendication 21, **caractérisé en ce que** ladite étape de simulation est réalisée en outre par rapport à la production énergétique des équipements de production d'énergie et le coût de revient de l'énergie produite.

23. Procédé de commande d'équipements de conditionnement d'ambiance pour une enceinte ou un ensemble d'enceintes selon la revendication 18, **caractérisé en ce que** ladite formule de calcul explicite correspond à un ensemble d'opérations arithmétiques et logiques appliquées aux variables d'environnement pour l'obtention d'une séquence de commande.

24. Procédé de commande d'équipements de conditionnement d'ambiance pour une enceinte ou un ensemble d'enceintes selon la revendication 18, **caractérisé en ce que** ladite minimisation de ladite fonction de coût correspond à une minimisation du prix de revient de l'énergie.

25. Programme d'ordinateur, **caractérisé en ce qu'**il comprend un ensemble d'instructions pour la réalisation du procédé selon la revendication 18.

26. Programme d'ordinateur selon la revendication 25, **caractérisé en ce qu'**il est stocké sur un support d'enregistrement.

## Claims

1. A system for controlling the environmental conditioning equipment for an enclosure or a set of enclosures, **characterized in that** it includes means making it possible:
- to compute, in anticipation, by simulation, at least one parameter chosen among the temperature and the chemical composition of the enclosure or of the set of enclosures, the energy consumption of the environmental conditioning equipment and the cost of the consumed energy, predicted for a given time range, as a function of an explicit computation formula associated with at least a sequence of commands sent to the environmental conditioning equipment during such time range,
- to perform such computation by simulation for an arbitrarily large number of explicit computation formulae for a given time range, and
- to select among said simulated computation formulae, the computation formula, so-called optimum computation formula, complying with the predefined constraints of the temperature and the chemical composition, and corresponding to the minimizing of a cost function related to said cost of energy.

2. A system according to claim 1, **characterized in that** it includes communication means for the acquisition of external data, for example but not necessarily, meteorological forecast data or data relating to the conditions of availability of the energy.

3. A system according to claim 1 or 2, **characterized in that** it includes a computation sub-system implementing optimization algorithms, such as the simplex algorithm or other similar algorithms, making it possible to accelerate the process of simulation and selection of the optimal sequence of commands.

4. A system according to any one of the preceding claims, **characterized in that** it has functions giving it specific characteristics of fault tolerance and service continuity.

5. A system according to any one of the preceding claims, **characterized in that** it has functions making it possible to control energy production equipment.

6. A system according to any one of the preceding claims, **characterized in that** it has functions making it possible to compute in anticipation the amount of energy produced by energy production equipment and the production cost of such energy, as a function of an explicit computation formula associated with at least one sequence of commands sent to such equipment, and of external data.

7. A system according to claim 5 and to claim 6, **characterized in that** it has functions making it possible (i) to compute in anticipation by simulation at least one parameter chosen among the temperature and the chemical composition of the enclosure or of the set of enclosures, the energy consumption of the environmental conditioning equipment, the energy production of the energy production equipment, the cost of the consumed energy and the produced energy, predicted for a given time range, as a function of an explicit computation formula associated with at least one sequence of commands sent to the environmental conditioning equipment and to the energy production equipment during this time range, (ii) to perform such computation by simulation for an arbitrarily large number of explicit computation formulae for a given time range, and (iii) to select, among the said simulated computation formulae, the computation formula, so-called the optimal computation formula, complying with the predetermined constraints of the temperature and the chemical composition, and corresponding to the minimizing of a cost function related to said cost of energy.

8. A system according to any one of the preceding claims, **characterized in that** it includes computation and communication means for the implementation of transactional automatic processes to and/or from external systems.

9. A system according to any one of the preceding claims, **characterized in that** it includes a computation sub-system and relay sub-systems making it possible to take over the commands from the computation sub-system to the controlled equipment; the computation sub-system and the relay sub-systems then have communication functions making it possible to exchange data.

10. A system according to claim 9, **characterized in that** the relay sub-systems have computation capacities making it possible to compute the commands to be sent to the environmental conditioning equipment or to the energy production equipment, such as the result of explicit computation formulae applied to the values measured of a certain number of environmental variables.

11. A system according to claim 10, **characterized in that** the computation sub-system and the relay sub-systems have functions which make it possible, automatically, for the computation sub-system, to load and to modify, in the relay sub-systems, the explicit computation formulae used by such relay sub-systems for the computation of the commands to be sent to the controlled equipment.

12. A system according to claim 10 or claim 11, **characterized in that** the computation sub-system has functions making it possible (i) to compute in anticipation by simulation at least one parameter chosen among the temperature and the chemical composition of the enclosure or of the set of enclosures, the energy consumption of the environmental conditioning equipment, the energy production of the energy production equipment, the cost of the consumed energy and the produced energy, predicted for a given time range, as a function of the explicit computation formulae sent to the relay sub-systems at the beginning of such time range, (ii) to perform such computation by simulation for an arbitrarily large number of explicit computation formulae and (iii) to select the explicit computation formulae, so-called the optimal explicit computation formulae, complying with the predetermined constraints of the temperature and the chemical composition and corresponding to the minimizing of a cost function related to said cost of energy.

13. A system according to claims 9, 10, 11 or 12, **characterized in that** the computation sub-system is located at a distance from the controlled equipment.

14. A system according to claim 13, **characterized in that** the computation sub-system has computation functions making it possible to compute the sequence of commands or the optimal explicit computation formulae for equipment located on distinct geographical sites.

15. A system according to any one of the preceding claims, **characterized in that** the computation sub-system or the relay sub-systems include man-machine interfaces, making it possible to describe the characteristics of the environmental conditioning equipment, the characteristics of the enclosure or of the set of enclosures, and the characteristics of the energy production equipment, and other data.

16. A system according to any one of the preceding claims, **characterized in that** the enclosure or the set of enclosures is a building or a set of buildings, the environmental conditioning equipment are the environmental conditioning equipment of such buildings, the production equipment are generating units, cogeneration plans, wind power stations, solar power stations or geothermal stations, the computation system is a computer or a set of computers, the relay sub-systems are electronic cards or sets of interconnected electronic cards, and the sources of energy are electricity, gas, fuel-oil, or biomass.

17. A system according to any one of claims 1 to 15, **characterized in that** the enclosure or the set of enclosures is a warehouse or a cold room, or a set of warehouses or cold rooms and the environmental conditioning equipment are cold production and distribution equipment.

18. A method for controlling the environmental conditioning equipment for an enclosure or a set of enclosures, **characterized in that** it includes at least the following steps:
- computing, in anticipation, by simulation, at least one parameters selected among the temperature and the chemical composition of the enclosure or of the set of enclosures, the energy consumption of the environmental conditioning equipment and the cost of the consumed energy, predicted for a given time range, as a function of explicit computation formulae during such time range, said computation being made by simulation for an arbitrarily large number of explicit computation formulae for a given time range, and
- selecting, among said explicit computation formulae, the explicit computation formulae, so-called the optimal explicit computation formulae, complying with the predetermined constraints of the temperature and the chemical composition and corresponding to the minimizing of a cost function related to said cost of energy.

19. A method for controlling the environmental conditioning equipment for an enclosure or a set of enclosures according to claim 18, **characterized in that** it further includes a data call step corresponding to at least one parameter selected among the temperature and the chemical composition of the enclosure or of the set of enclosures, the energy consumption of the environmental conditioning equipment, and the cost of the consumed energy, predicted for a given time range.

20. A method for controlling the environmental conditioning equipment for an enclosure or a set of enclosures according to claim 18, **characterized in that** it further includes a step of acquisition of data associated with said enclosure or said set of enclosures.

21. A method for controlling the environmental conditioning equipment for an enclosure or a set of enclosures according to claim 18, **characterized in that** it further includes a step of computing in anticipation the amount of energy produced by energy production equipment and the cost of production of said energy as a function of the commands sent to such equipment, and of external data.

22. A method for controlling the environmental conditioning equipment for an enclosure or a set of enclosures according to claim 21, **characterized in that** said simulation step is further carried out with respect to the energy production of the energy production equipment and the cost of the produced energy.

23. A method for controlling the environmental conditioning equipment for an enclosure or a set of enclosures according to claim 18, **characterized in that** said explicit computation formula corresponds to a set of arithmetic and logical operations applied to the environmental variables, for obtaining a sequence of commands.

24. A method for controlling the environmental conditioning equipment for an enclosure or a set of enclosures according to claim 18, **characterized in that** said minimizing of said cost function corresponds to a minimizing of the energy cost.

25. A computer program, **characterized in that** it includes a set of instructions for carrying out the method according to claim 18.

26. A computer program according to claim 25, **characterized in that** it is stored on a recording medium.

## Patentansprüche

1. Steuersystem für Klimaanlagen für einen Raum oder eine Gruppe von Räumen, **dadurch gekennzeichnet, daß** es Mittel umfaßt, mit denen es
- Im voraus durch Simulation mindestens einen unter der Temperatur und der chemischen Zusammensetzung des Raums oder der Gruppe von Räumen gewählten Parameter berechnen kann, den Energieverbrauch der Klimaanlagen und die Selbstkosten der verbrauchten Energie, und dies mit Voraussicht auf eine gegebene Zeitspanne nach einer expliziten Berechnungsformel in Verbindung mit mindestens einer Abfolge von Befehlen, die während dieser Zeitspanne an die Klimaanlagen geschickt werden;
- Diese Berechnung durch Simulation für eine beliebig große Anzahl expliziter Berechnungsformeln über eine gegebene Zeitspanne durchführen kann;
- Unter den besagten simulierten Berechnungsformeln die Berechnungsformel wählen kann, die optimale Berechnungsformel genannt wird, die die vorher festgelegten Auflagen für Temperatur und chemische Zusammensetzung berücksichtigt, und die der Minimierung einer Kostenfunktion entspricht, die an den besagten Selbstkostenpreis der Energie gebunden ist.

2. System nach Anspruch 1, **dadurch gekennzeichnet, daß** es Mittel für die Kommunikation für den Erwerb von äußeren Daten umfaßt, zum Beispiel aber nicht notwendigerweise Daten für meteorologische Vorhersagen oder Daten bezüglich der Bedingungen der Verfügbarkeit der Energien.

3. System nach Anspruch 1 oder 2, **dadurch gekennzeichnet, daß** es ein Berechnungs-Subsystem umfaßt, das Algorithmen zur Optimierung benutzt, wie zum Beispiel den Simplex-Algorithmus oder andere ähnliche Algorithmen, mit denen der Prozeß der Simulierung und der Wahl der optimalen Befehlsfolge beschleunigt werden kann.

4. System nach einem beliebigen der vorstehenden Ansprüche, **dadurch gekennzeichnet, daß** es über Funktionen verfügt, die ihm Merkmale der Toleranz bei Ausfällen und der Kontinuität von spezifischem Service gewährleisten.

5. System nach einem beliebigen der vorstehenden Ansprüche, **dadurch gekennzeichnet, daß** es über Funktionen verfügt, mit denen es Ausrüstungen für die Energieerzeugung steuern kann.

6. System nach einem beliebigen der vorstehenden Ansprüche, **dadurch gekennzeichnet, daß** es über Funktionen verfügt, mit denen es im voraus die Energiemenge berechnen kann, die von den Ausrüstungen für die Energieerzeugung erzeugt wird und den Selbstkostenpreis der Erzeugung dieser Energie, dies nach einer expliziten.Berechnungsformel in Verbindung mit mindestens einer an diese Ausrüstungen geschickten Befehlsfolge und äußeren Daten.

7. System nach Anspruch 5 und Anspruch 6, **dadurch gekennzeichnet, daß** es über Funktionen verfügt, mit denen es a) im voraus durch Simulation mindestens einen unter der Temperatur und der chemischen Zusammensetzung des Raums oder der Gruppe von Räumen gewählten Parameter berechnen kann, den Energieverbrauch der Klimaanlagen, die Energieerzeugung der Ausrüstungen für die Energieerzeugung, die Selbstkosten der verbrauchten Energie und der erzeugten Energie, wie in einer gegebenen Zeitspanne vorgesehen, dies nach einer expliziten Berechnungsformel in Verbindung mit mindestens einer Abfolge von Befehlen, die während dieser Zeitspanne an die Klimaanlagen und an die Ausrüstungen für die Energieerzeugung geschickt werden, b) diese Berechnung durch Simulation für eine beliebige große Anzahl von expliziten Berechnungsformeln über eine gegebene Zeitspanne durchführen kann, und c) unter den besagten simulierten Berechnungsformeln die Berechnungsformel wählen kann, die optimale Berechnungsformel genannt wird, unter Einhaltung der vorher festgelegten Auflagen für Temperatur und chemische Zusammensetzung berücksichtigt, und die der Minimierung einer Kostenfunktion entspricht, die an den besagten Selbstkostenpreis der Energie gebunden ist.

8. System nach einem beliebigen der vorstehenden Ansprüche, **dadurch gekennzeichnet, daß** es Mittel zur Berechnung und zur Kommunikation für den Einsatz von automatischen Transaktions-Subverfahren zu oder ab äußeren Systemen umfaßt.

9. System nach einem beliebigen der vorstehenden Ansprüche, **dadurch gekennzeichnet, daß** es ein Berechnungs-Subsystem und Relais-Subsysteme umfaßt, mit denen es die Befehle ab dem Berechnungs-Subsystem an die gesteuerten Ausrüstungen weitergeben kann, wobei das Berechnungs-Subsystem und die Relais-Subsysteme dann über Funktionen zur Kommunikation verfügen, mit denen sie Daten austauschen können.

10. System nach Anspruch 9, **dadurch gekennzeichnet, daß** die Relais-Subsysteme über Rechenkapazitäten verfügen, mit denen sie die Befehle berechnen können, die an die Klimaanlagen oder an die Ausrüstungen für die Energieerzeugung geschickt werden sollen, wie zum Beispiel das Ergebnis von expliziten Berechnungsformeln, die für die gemessenen Werte einer gewissen Anzahl Variabler der Umgebung angewendet werden.

11. System nach Anspruch 10, **dadurch gekennzeichnet, daß** die Berechnungs-Subsysteme und die Relais-Subsysteme über Funktionen verfügen, mit denen das Berechnungs-Subsystem automatisch die expliziten Berechnungsformeln in die Relais-Subsysteme laden und dort verändern kann, die von diesen Relais-Subsystemen für die Berechnung der Befehle benutzt werden, die an die gesteuerten Ausrüstungen geschickt werden sollen.

12. System nach Anspruch 10 oder Anspruch 11, **dadurch gekennzeichnet, daß** das Berechnungs-Subsystem über Funktionen verfügt, mit denen es a) im voraus durch Simulation mindestens einen unter der Temperatur und der chemischen Zusammensetzung des Raums oder der Gruppe von Räumen, dem Energieverbrauch der Klimaanlagen, der Energieerzeugung der Ausrüstungen für die Energieerzeugung, den Selbstkosten der verbrauchten Energie und der erzeugten Energie, wie in einer gegebenen Zeitspanne vorgesehen, je nach expliziten Berechnungsformeln berechnen kann, die zu Beginn dieser Zeitspanne an die Relais-Subsysteme geschickt werden, b) diese Berechnung durch Simulation für eine beliebige große Anzahl von expliziten Berechnungsformeln durchführen kann, und c) die expliziten Berechnungsformeln wählen kann, die optimale explizite Berechnungsformeln genannt werden, die vorher festgelegten Auflagen für Temperatur und chemische Zusammensetzung berücksichtigt, und die der Minimierung einer Kostenfunktion entspricht, die an den besagten Selbstkostenpreis der Energie gebunden ist.

13. System nach den Ansprüchen 9, 10, 11 oder 12, **dadurch gekennzeichnet, daß** das Berechnungs-Subsystem in Entfernung von den gesteuerten Ausrüstungen untergebracht ist.

14. System nach Anspruch 13, **dadurch gekennzeichnet, daß** das Berechnungs-Subsystem über Berechnungsfunktionen verfügt, mit denen es die Befehlsfolgen oder die optimalen expliziten Berechnungsformeln für an getrennten geographischen Standorten untergebrachten Ausrüstungen berechnen kann.

15. System nach einem beliebigen der vorstehenden Ansprüche, **dadurch gekennzeichnet, daß** das Berechnungs-Subsystem oder die Relais-Subsysteme Mensch-Maschine-Schnittstellen umfassen, mit denen die Merkmale der Klimaanlagen, die Merkmale des Raums oder der Gruppe von Räumen und die Merkmale der Ausrüstungen für die Energieerzeugung und weitere Daten beschrieben werden können.

16. System nach einem beliebigen der vorstehenden Ansprüche, **dadurch gekennzeichnet, daß** der Raum oder die Gruppe von Räumen ein Gebäude oder eine Gruppe von Gebäuden ist, daß die Klimaanlagen Klimaanlagen dieser Gebäude sind, daß die Ausrüstungen für die Erzeugung Stromgeneratoren, Kraftwerke für die gleichzeitige Erzeugung zweier Energiearten, Windkraftwerke, Solarkraftwerke oder geothermische Kraftwerke sind, das Berechnungs-Subsystem ein Computer oder eine Gruppe von Computern ist, daß die Relais-Subsysteme elektronische Karten oder Gruppen von zusammengeschalteten elektronischen Karten sind, und daß die Energiequellen der Strom, das Gas, das Heizöl oder die Biomasse sind.

17. System nach einem beliebigen der vorstehenden Ansprüche 1 bis 15, **dadurch gekennzeichnet, daß** der Raum oder die Gruppe von Räumen ein Lager oder eine Kältekammer oder eine Gruppe von Lagern oder von Kältekammern ist, und daß die Klimaanlagen Ausrüstungen für die Erzeugung und Distribution der Kälte sind.

18. Verfahren für die Steuerung von Klimaanlagen für einen Raum oder eine Gruppe von Räumen, **dadurch gekennzeichnet, daß** es mindestens die Schritte umfaßt, die aus folgendem bestehen:
- Im voraus durch Simulation mindestens einen unter der Temperatur und der chemischen Zusammensetzung des Raums oder der Gruppe von Räumen gewählten Parameter berechnen, den Energieverbrauch der Klimaanlagen und die Selbstkosten der verbrauchten Energie, wie für eine gegebene Zeitspanne vorgesehen ist, dies nach expliziten Berechnungsformeln während dieser Zeitspanne, wobei die besagte Berechnung durch Simulation für eine beliebig große Anzahl expliziter Berechnungsformeln über eine gegebene Zeitspanne durchgeführt wird;
- Unter den besagten die expliziten Berechnungsformeln wählen, wobei die expliziten Berechnungsformeln, die optimale Berechnungsformeln genannt werden, die vorher festgelegten Auflagen für Temperatur und chemische Zusammensetzung berücksichtigen und der Minimierung einer Kostenfunktion entsprechen, die an den besagten Selbstkostenpreis der Energie gebunden ist.

19. Verfahren für die Steuerung von Klimaanlagen für einen Raum oder eine Gruppe von Räumen nach Anspruch 18, **dadurch gekennzeichnet, daß** es ferner einen Schritt mit Abruf von Daten umfaßt, die mindestens einem der unter der Temperatur und der chemischen Zusammensetzung des Raums oder der Gruppe von Räumen, des Energieverbrauchs der Klimaanlagen und der Selbstkosten der verbrauchten Energie gewählten Parameter entspricht, die für eine gegebene Zeitspanne vorgesehen sind.

20. Verfahren für die Steuerung von Klimaanlagen für einen Raum oder eine Gruppe von Räumen nach Anspruch 18, **dadurch gekennzeichnet, daß** es ferner einen Schritt mit Erwerb von Daten umfaßt, die mit dem besagten Raum oder der besagten Gruppe von Räumen verbunden sind.

21. Verfahren für die Steuerung von Klimaanlagen für einen Raum oder eine Gruppe von Räumen nach Anspruch 18, **dadurch gekennzeichnet, daß** es ferner einen Schritt mit Berechnung im voraus der von den Ausrüstungen für die Erzeugung von Energie erzeugten Energiemenge und der Selbstkosten der Erzeugung dieser Energie umfaßt, dies je nach den an diese Ausrüstung geschickten Befehlen und äußeren Daten.

22. Verfahren für die Steuerung von Klimaanlagen für einen Raum oder eine Gruppe von Räumen nach Anspruch 21, **dadurch gekennzeichnet, daß** der besagte Schritt der Simulation ferner im Verhältnis zur Energieerzeugung der Ausrüstungen für die Erzeugung von Energie und zu den Selbstkosten der erzeugten Energie durchgeführt wird.

23. Verfahren für die Steuerung von Klimaanlagen für einen Raum oder eine Gruppe von Räumen nach Anspruch 18, **dadurch gekennzeichnet, daß** die besagte explizite Berechnungsformel einer Reihe von arithmetischen und logischen Vorgängen entspricht, die auf die Umgebungsvariablen zur Erzielung einer Befehlsfolge angewendet werden.

24. Verfahren für die Steuerung von Klimaanlagen für einen Raum oder eine Gruppe von Räumen nach Anspruch 18, **dadurch gekennzeichnet, daß** die besagte Minimierung der besagten Kostenfunktion einer Minimierung der Selbstkosten der Energie entspricht.

25. Computerprogramm, **dadurch gekennzeichnet, daß** es eine Reihe von Anweisungen für die Realisierung des Verfahrens nach Anspruch 18 umfaßt.

26. Computerprogrammm nach Anspruch 25, **dadurch gekennzeichnet, daß** es auf einem Aufzeichnungsträger gespeichert ist.
